# EUROPEAN PATENT APPLICATION

(11) **EP 2 461 507 A2**
(43) Date of publication of application: **06.06.2012**
(21) Application number: 11191085.7
(22) Date of filing: 29.11.2011
(51) Int. Cl.: H04J 14/02

(54) **Optical transmission equipment**

(30) Priority: 06.12.2010 JP 2010271168
(71) Applicant: Fujitsu Limited, Kawasaki-shi, Kanagawa 211-8588 (JP)
(72) Inventor: Itoh, Hiroyuki, Kanagawa, 211-8588 (JP); Takatsu, Kazuo, Kanagawa, 211-8588 (JP)
(74) Representative: HOFFMANN EITLE

(57) **Abstract**

Optical transmission equipment includes: a first optical amplifier (22) configured to amplify an input optical signal; a second optical amplifier (23) provided at an output side of the first optical amplifier; an optical module (30) having a first relay port (31x) configured to receive an optical signal from the first optical amplifier, a second relay port (31y) configured to output an optical signal to the second optical amplifier, an optical device (33) provided between the first relay port and the second relay port, and a first output port (32) optically couplable to the optical device; and a second output port (26T) configured to output the optical signal amplified by the second optical amplifier.

## Description

### FIELD

The embodiments described in this application are related to optical transmission equipment for transmitting an optical signal.

### BACKGROUND

Recently, an optical network has become widespread to realize a bulk communication and/or a long haul communication. The optical network includes a plurality of optical transmission equipments, and optical transmission equipments are interconnected through optical fibers. An optical signal is transmitted through the optical fibers.

In the optical network, an optical signal is attenuated by various factors. For example, when the distance between the optical transmission equipments become longer, the optical signal transmitted through the optical fiber is attenuated. In addition, when chromatic dispersion is compensated for in the optical transmission equipment, the optical signal is attenuated through the dispersion compensation fiber in the optical transmission equipment. Furthermore, when the optical transmission equipment splits the input optical signal and guides the signals to a plurality of destinations, the level of the optical signal transmitted to each destination becomes lower than the input optical signal.

Therefore, in the optical network, at least a part of the optical transmission equipments include an optical amplifier for amplifying the optical signal. The optical amplifier provided for the optical transmission equipment is designed, for example, in such a way that input level of the optical signal at an optical receiver is controlled within a specified range.

An optical add/drop multiplexer including an optical amplifier has been proposed as a related technology (for example, Japanese Laid-open Patent Publication No. 2006-67546).

To realize a further capacity of the optical network, a higher transmission rate of an optical signal is being studied and developed. For example, in a WDM system, it is expected that the transmission rate of each wavelength channel is improved from 10 Gbit/s to 40 Gbit/s or more.

However, when the transmission rate of the optical signal becomes higher, the optical amplifier provided for the optical transmission equipment faces different requirements. For example, when the baud rate of the optical signal is 10 Gbaud, the chromatic dispersion of the transmission line is compensated for by an optical device (for example, a dispersion compensation fiber). However, in the optical network that the baud rate of the optical signal is 20 Gbaud or more, an expensive variable dispersion compensator is to be implemented to compensate for the chromatic dispersion, if the dispersion is compensated by the optical device, thereby increasing the cost. In this case, the chromatic dispersion is compensated for by digital signal processing. That is, when the baud rate of the optical signal is improved from 10 Gbaud to 20 Gbaud, a dispersion compensation fiber is not necessary for each optical transmission equipment. Accordingly, it is not necessary for each optical transmission equipment to compensate for the loss in the dispersion compensation fiber, thus the required gain of an optical amplifier is reduced.

In addition, when the baud rate of the optical signal is improved from 10 Gbaud to 20 Gbaud, the optical signal to noise ratio (OSNR) required for a receiver is higher. Therefore, to improve the OSNR of the receiver, it is necessary to reduce the noise figure (NF) of the optical amplifier of the optical transmission equipment.

However, in the transition period to a higher speed optical network, there exist optical signals of different transmission rates in the optical network. Therefore, it is difficult to collectively replace all optical transmission equipments in the optical network. Accordingly, it is demanded to provide optical transmission equipment that transmits optical signals of different transmission rates.

### SUMMARY

It is an object in one aspect of the invention is to provide an optical transmission equipment capable of transmitting optical signals of different transmission rates.

According to an aspect of the invention, optical transmission equipment includes: a first optical amplifier configured to amplify an input optical signal; a second optical amplifier provided at an output side of the first optical amplifier; an optical module having a first relay port configured to receive an optical signal from the first optical amplifier, a second relay port configured to output an optical signal to the second optical amplifier, an optical device provided between the first relay port and the second relay port, and a first output port optically couplable to the optical device; and a second output port configured to output the optical signal amplified by the second optical amplifier.

### BRIEF DESCRIPTION OF DRAWINGS

FIG. 1 illustrates an example of an optical network using optical transmission equipment according to the embodiments;
FIG. 2 illustrates a configuration of a reconfigurable optical add/drop multiplexer (ROADM);
FIG. 3 illustrates a configuration of a relay station (ILA);
FIG. 4 illustrates a configuration of the optical transmission equipment according to the first embodiment;
FIG. 5 illustrates an embodiment of a first stage optical amplifier;
FIG. 6 is an explanatory view of the equalization of a gain of an EDFA;
FIG. 7 illustrates the optical transmission equipment according to the first embodiment when a dispersion compensation fiber is implemented;
FIG. 8 is an optical level diagram in the optical transmission equipment illustrated in FIG. 7;
FIG. 9 illustrates the optical transmission equipment according to the first embodiment when the dispersion compensation fiber is not implemented;
FIG. 10 is an optical level diagram in the optical transmission equipment illustrated in FIG. 9;
FIG. 11 illustrates an optical level diagram of another configuration;
FIG. 12 illustrates a configuration of the optical transmission equipment according to the second embodiment;
FIG. 13 is an optical level diagram in the optical transmission equipment according to the second embodiment;
FIG. 14 illustrates a configuration of the optical transmission equipment according to the third embodiment;
FIGS 15A and 15B are flowcharts of the gain control of the optical transmission equipment illustrated in FIG. 14;
FIG. 16 illustrates another configuration of the optical transmission equipment according to the third embodiment;
FIGS. 17A and 17B are flowcharts of the gain control of the optical transmission equipment illustrated in FIG. 16;
FIG. 18 illustrates still another configuration of the optical transmission equipment according to the third embodiment; and
FIGS. 19A and 19B are flowcharts of the gain control of the optical transmission equipment illustrated in FIG. 18.

### DESCRIPTION OF EMBODIMENTS

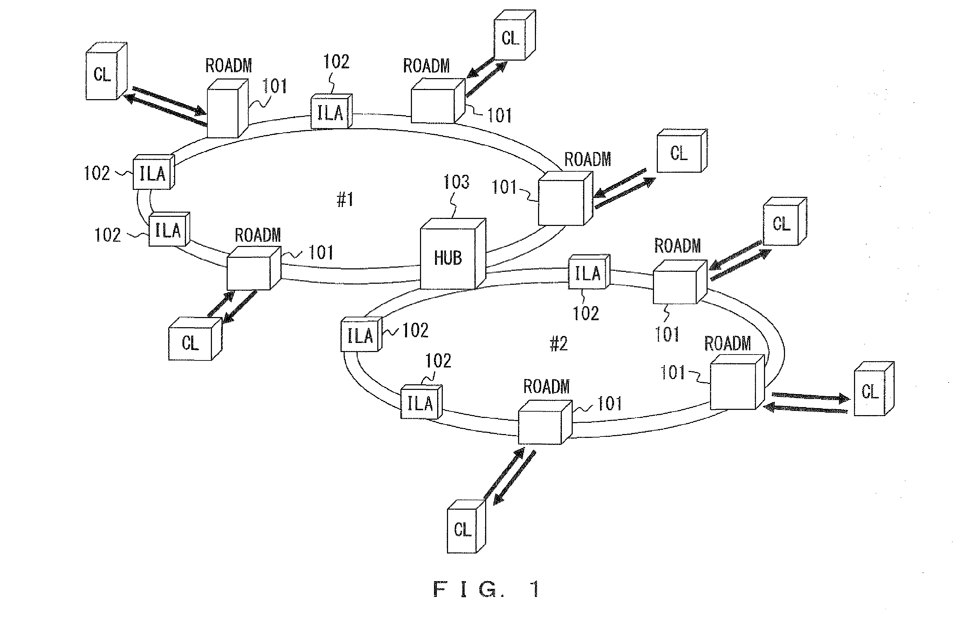

FIG. 1 illustrates an example of an optical network in which optical transmission equipment according to the embodiments is used. The optical network illustrated in FIG. 1 includes ring networks #1 and #2. Each ring network transmits WDM optical signal through an optical fiber transmission line. The WDM optical signal includes a plurality of optical signals of different wavelengths.

Each ring network includes a reconfigurable optical add/drop multiplexer (ROADM) 101 and a relay station (In-line amplifier (ILA)) 102. An internetwork relay station (HUB) 103 relays an optical signal between the ring networks #1 and #2.

The reconfigurable optical add/drop multiplexer 101 amplifies the WDM optical signal on the optical fiber transmission line and transmits the signal to the next node (the relay station 102, the reconfigurable optical add/drop multiplexer 101, or the internetwork relay station 103). In addition, the reconfigurable optical add/drop multiplexer 101 can accommodate a client device (CL). The reconfigurable optical add/drop multiplexer 101 can extract (that is, drop) an optical signal of a specified wavelength from the WDM optical signal, and transmits the extracted signal to the client device. Furthermore, the reconfigurable optical add/drop multiplexer 101 can insert (that is, add) an optical signal transmitted from the client device into the WDM optical signal.

The relay station 102 amplifies the WDM optical signal on the optical fiber transmission line and transmits the signal to the next node (the relay station 102, the reconfigurable optical add/drop multiplexer 101, or the internetwork relay station 103). The internetwork relay station 103 includes a plurality of reconfigurable optical add/drop multiplexers 101. For example, the internetwork relay station 103 illustrated in FIG. 1 includes a reconfigurable optical add/drop multiplexer belonging to the ring network #1 and a reconfigurable optical add/drop multiplexer belonging to the ring network #2. Then, the internetwork relay station 103 relays an optical signal between the ring networks #1 and #2.

In the optical network illustrated in FIG. 1, the reconfigurable optical add/drop multiplexer 101 is an example of the optical transmission equipment according to the embodiments of the present invention. The relay station 102 is also an example of the optical transmission equipment according to the embodiments of the present invention. The optical transmission equipment according to the embodiments of the present invention may be implemented in the reconfigurable optical add/drop multiplexer 101 or the relay station 102.

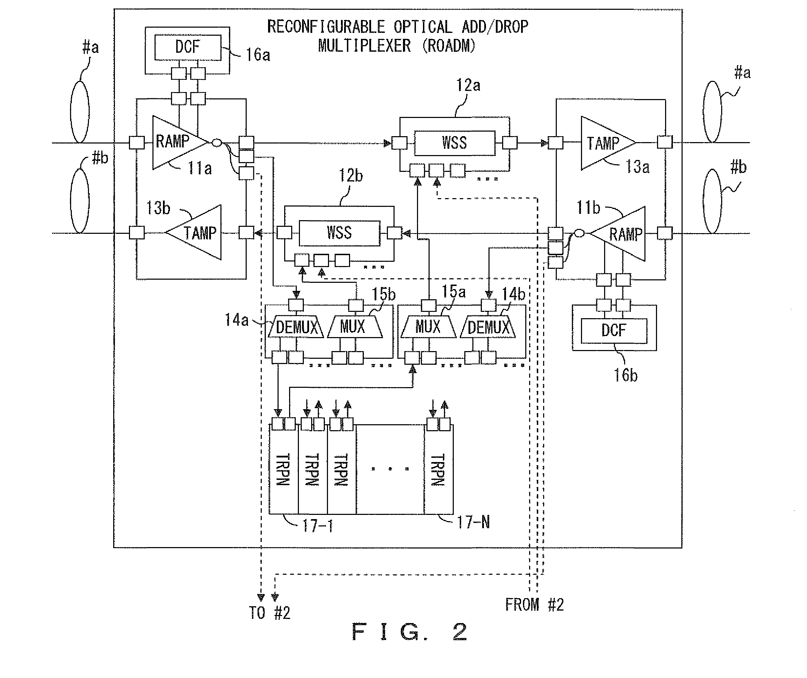

FIG. 2 illustrates a configuration of the reconfigurable optical add/drop multiplexer. The reconfigurable optical add/drop multiplexer illustrated in FIG. 2 is provided on a bidirectional transmission line. Therefore, the reconfigurable optical add/drop multiplexer illustrated in FIG. 2 includes a #a system circuit for a WDM optical signal transmitted through an optical transmission line #a, and a #b system circuit for a WDM optical signal transmitted through an optical transmission line #b. The optical transmission line #a and the optical transmission line #b form the bidirectional transmission line. Furthermore, the reconfigurable optical add/drop multiplexer includes transponder units (TRPN) 17-1 through 17-N.

The #a system circuit includes a receiver amplifier (RAMP) 11a, a wavelength selective switch (WSS) 12a, a transmitter amplifier (TAMP) 13a, a demultiplexer (DEMUX) 14a, and a multiplexer (MUX) 15a. The receiver amplifier 11a amplifies the optical signal input from the optical transmission line #a. The optical signal amplified by the receiver amplifier 11a is split by an optical splitter, and guided to the wavelength selective switch 12a and the demultiplexer 14a. The wavelength selective switch 12a selects a specified wavelength channel in the optical signal output from the receiver amplifier 11a. In addition, the wavelength selective switch 12a selects a specified wavelength channel in the optical signal output from the multiplexer 15a. The transmitter amplifier 13a amplifies the optical signal output from the wavelength selective switch 12a.

The demultiplexer 14a demultiplexes the optical signal amplified by the receiver amplifier 11a for each wavelength. The optical signal of each wavelength channel obtained by the demultiplexer 14a is guided to corresponding transponder units 17-1 through 17-N.

The transponder units 17-1 through 17-N accommodate each client circuit (a down link and an up link). Upon receipt of the optical signal from the demultiplexer 14a, the transponder units 17-1 through 17-N transmit the optical signal to the client device through the client circuit. In addition, upon receipt of the optical signal from the client device, the transponder units 17-1 through 17-N guide the optical signal to corresponding input port of the multiplexer 15a. In addition, the transponder units 17-1 through 17-N may include the function of converting the wavelength of the optical signal.

The multiplexer 15a multiplexes the optical signals output from the transponder units 17-1 through 17-N. The optical signal output from the multiplexer 15a is guided to the wavelength selective switch 12a.

The #a system circuit may further include a dispersion compensator (DCF) 16a. The dispersion compensator 16a is, for example, a dispersion compensation fiber, and compensates for the chromatic dispersion of the optical transmission line #a. In the configuration in which the receiver amplifier 11a includes the first stage optical amplifier and a second stage optical amplifier, the dispersion compensator 16a may be provided between the first and second stage optical amplifiers.

The reconfigurable optical add/drop multiplexer illustrated in FIG. 2 may operate as a part of the internetwork relay station 103 illustrated in FIG. 1. For example, it is assumed that the reconfigurable optical add/drop multiplexer illustrated in FIG. 2 belongs to the ring network #1. In this case, the reconfigurable optical add/drop multiplexer illustrated in FIG. 2 transmits and receives the optical signal to and from another reconfigurable optical add/drop multiplexer belonging to the ring network #2 in the internetwork relay station 103.

When the reconfigurable optical add/drop multiplexer illustrated in FIG. 2 operates as a part of the internetwork relay station 103 illustrated in FIG. 1, the optical signal amplified by the receiver amplifier 11a is split by the optical splitter, and guided to the wavelength selective switch 12a, the demultiplexer 14a, and the reconfigurable optical add/drop multiplexer of the ring network #2. The optical signal transmitted from the reconfigurable optical add/drop multiplexer of the ring network #2 is guided to the wavelength selective switch 12a. The wavelength selective switch 12a selects a specified wavelength channel from each of the optical signal output from the receiver amplifier 11a, the optical signal output from the multiplexer 15a, and the optical signal received from the ring network #2.

The #b system circuit includes a receiver amplifier (RAMP) 11b, a wavelength selective switch (WSS) 12b, a transmitter amplifier (TAMP) 13b, a demultiplexer (DEMUX) 14b, a multiplexer (MUX) 15b, and a dispersion compensator (DCF) 16b. The configuration and the operation of the #b system circuit is substantially the same as those of the #a system circuit. Therefore, the explanation of the #b system circuit is omitted here.

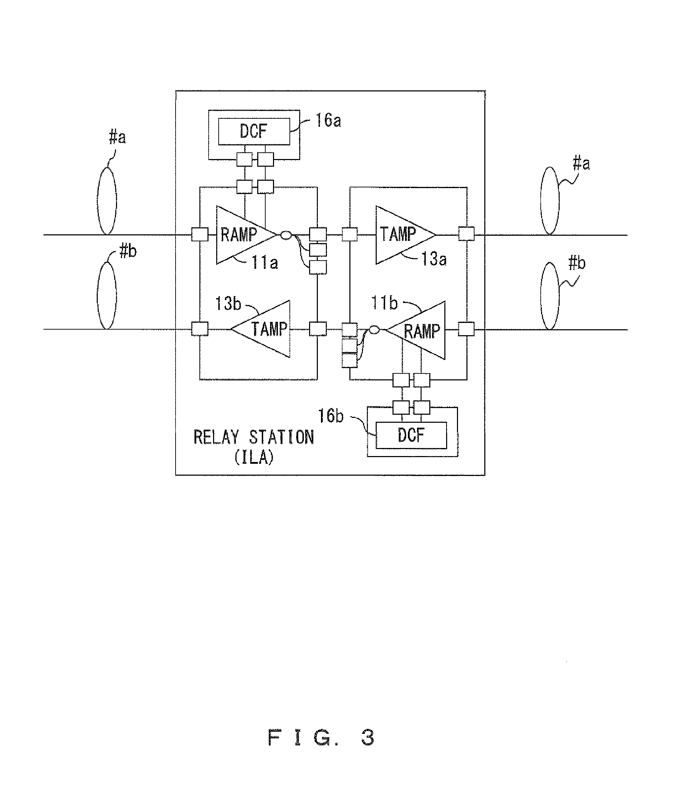

FIG. 3 illustrates a configuration of the relay station. The relay station illustrated in FIG. 3 is provided on the bidirectional transmission line as with the reconfigurable optical add/drop multiplexer illustrated in FIG. 2. That is, the relay station illustrated in FIG. 3 includes a #a system circuit for the WDM optical signal transmitted through the optical transmission line #a, and a #b system circuit for the WDM optical signal transmitted through the optical transmission line #b.

The #a system circuit of the relay station includes the receiver amplifier (RAMP) 11a the transmitter amplifier (TAMP) 13a, and the dispersion compensator (DCF) 16a. The receiver amplifier 11a amplifies the optical signal input from the optical transmission line #a. The transmitter amplifier 13a further amplifies the optical signal output from the receiver amplifier 11a. The dispersion compensator 16a is optically coupled to the receiver amplifier 11a, and compensates for the chromatic dispersion of the optical transmission line #a. Since the configuration and the operation of the #b system circuit of the relay station is substantially the same as the #a system circuit of the relay station, the explanation is omitted here.

### <First Embodiment>

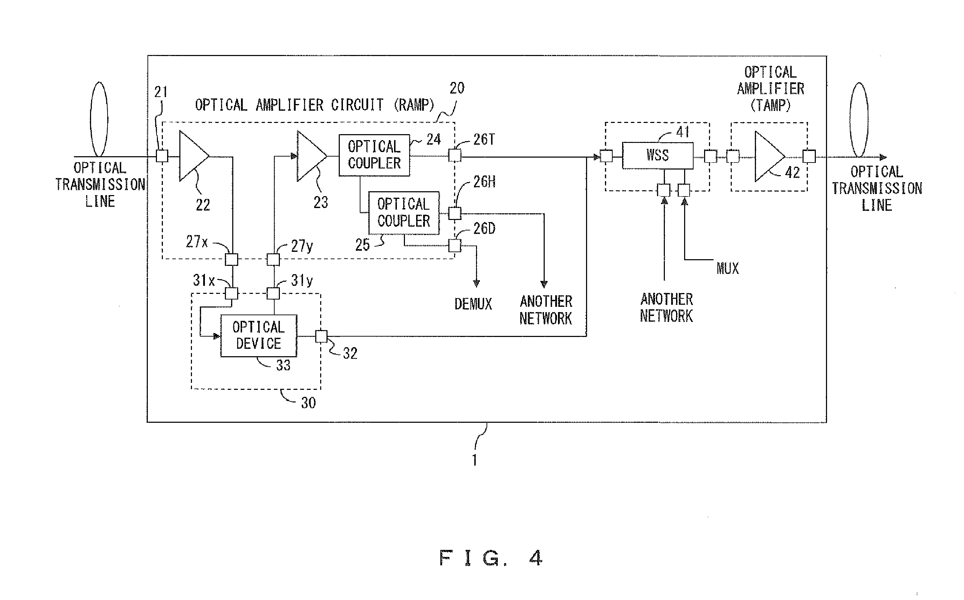

FIG. 4 illustrates a configuration of the optical transmission equipment according to the first embodiment. The optical transmission equipment 1 illustrated in FIG. 4 operates as, for example, the reconfigurable optical add/drop multiplexer (ROADM) 101 illustrated in FIG. 1.

The optical transmission equipment 1 includes an optical amplifier circuit (receiver amplifier (RAMP)) 20, an optical module 30, a wavelength selective switch (WSS) 41, and an optical amplifier (transmitter amplifier (TAMP)) 42. The optical transmission equipment 1 may operate as a part of the #a system circuit of the reconfigurable optical add/drop multiplexer illustrated in FIG. 2, or a part of the #b system circuit of the reconfigurable optical add/drop multiplexer illustrated in FIG. 2. When the optical transmission equipment 1 operates as, for example, a part of the #a system circuit of the reconfigurable optical add/drop multiplexer illustrated in FIG. 2, the optical amplifier circuit 20, the wavelength selective switch 41, and the optical amplifier 42 of the optical transmission equipment 1 respectively correspond to the receiver amplifier 11a, the wavelength selective switch 12a, and the transmitter amplifier 13a.

The optical amplifier circuit 20 includes an input port 21, a first stage optical amplifier 22, a second stage optical amplifier 23, optical couplers 24 and 25, a THROUGH port 26T, a HUB port 26H, a DROP port 26D, and relay ports 27x and 27y. The optical amplifier circuit 20 operates as a receiver amplifier for amplifying an optical signal received through an optical transmission line.

The input port 21 is optically coupled to the optical transmission line. The optical signal transmitted through the optical transmission line is WDM optical signal in this embodiment. The optical signal transmitted through the optical transmission line is input to the optical amplifier circuit 20 through the input port 21. Note that, in the first embodiment, the optical signal transmitted through the optical transmission line may be a signal other than the WDM optical signal.

The first stage optical amplifier 22 amplifies an input optical signal. The optical signal amplified by the first stage optical amplifier 22 is guided to the optical module 30 through the relay port 27x. The first stage optical amplifier 22 includes an EDFA 22a, a variable optical attenuator (VOA) 22b, and an EDFA 22c. The EDFA 22a amplifies the input optical signal with a specified gain. The variable optical attenuator 22b adjusts the optical power of the optical signal amplified by the EDFA 22a so that the output power of the variable optical attenuator 22b maintains a specified level. The EDFA 22c amplifies the optical signal output from the variable optical attenuator 22b. The EDFA 22a and the EDFA 22c are erbium-doped fiber amplifiers.

The first stage optical amplifier 22 may further include an equalizer 22d. The equalizer 22d equalizes the optical power of each channel of the WDM optical signal. In this case, the equalizer 22d may adjust the optical power of each channel of the WDM optical signal so that, for example, the optical power of each channel of the WDM optical signal has a specified pattern with respect to the wavelength. The equalizer 22d is provided, for example, between the variable optical attenuator 22b and the EDFA 22c, or on the output side of the EDFA 22c. In addition, the equalizer 22d may be realized by, for example, an optical device having a fixed characteristic.

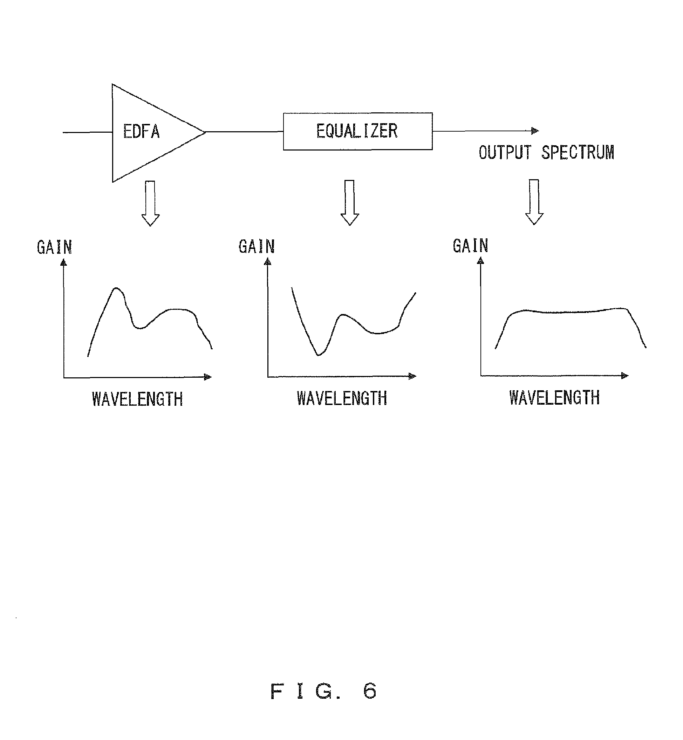

FIG. 6 is an explanatory view of the equalization of a gain of the EDFA. The gain of the EDFA depends on a wavelength as illustrated in FIG. 6. Therefore, to obtain a flat gain with respect to the wavelength, an equalizer to cancel the gain characteristic of the EDFA is used. However, if the power of pumping light is changed for adjustment of the gain of the EDFA, a gain pattern of the EDFA is changed. In this case, the WDM optical signal cannot be equalized using the above-mentioned equalizer. Therefore, it is preferable that the gain of each EDFA is fixed in the optical transmission equipment 1.

The second stage optical amplifier 23 includes an EDFA, and amplifies the optical signal output from the optical module 30. In this case, the optical signal from the optical module 30 is guided to the second stage optical amplifier 23 through the relay port 27y.

The optical coupler 24 splits the optical signal output from the second stage optical amplifier 23, and guides the signal to the THROUGH port 26T and the optical coupler 25. The optical coupler 25 splits the optical signal output from the optical coupler 24, and guides the signal to the HUB port 26H and the DROP port 26D. Each of the optical couplers 24 and 25 operates as an optical splitter.

The optical signal output through the THROUGH port 26T is guided to the wavelength selective switch 41 as necessary as described later. The HUB port 26H is optically coupled to the reconfigurable optical add/drop multiplexer belonging to another network when the optical transmission equipment 1 is used in the internetwork relay station (HUB) illustrated in FIG. 2. The optical signal output through the DROP port 26D is guided to the demultiplexer (DEMUX) for accommodating a client circuit. The demultiplexer corresponds to, for example, the demultiplexers 14a and 14b illustrated in FIG. 2.

The optical module 30 includes relay ports 31x and 31y, an output port 32, and an optical device 33. The relay port 31x is optically coupled to the relay port 27x of the optical amplifier circuit 20 using, for example, an optical fiber. Therefore, the optical signal output from the first stage optical amplifier 22 is guided to the optical module 30 through the relay port 31x. That is, the relay port 31x receives the optical signal amplified by the first stage optical amplifier 22.

The input optical signal to the optical module 30 is guided to the optical device 33. That is, the optical signal output from the first stage optical amplifier 22 is guided to the optical device 33 through the relay ports 27x and 31x. The optical signal output from the optical device 33 is guided to the relay port 31y. However, the optical signal output from the optical device 33 can be guided to both of the relay port 31y and the output port 32. The output port 32 is formed optically couplable to the optical device 33. The optical device 33 can be, for example, a dispersion compensator or an optical coupler, as described later in detail.

The relay port 31y is optically coupled to the relay port 27y of the optical amplifier circuit 20 using, for example, an optical fiber. Therefore, the optical signal output from the optical device 33 is guided to the second stage optical amplifier 23 through the relay ports 31y and 27y. The optical signal output through the output port 32 is guided to the wavelength selective switch 41 as necessary as described later in detail.

An optical signal output from the optical amplifier circuit 20 or the optical module 30 is guided the wavelength selective switch 41. The THROUGH port 26T and the output port 32 may be optically coupled to an input port of the wavelength selective switch 41. In this case, the THROUGH port 26T and the output port 32 may be optically coupled to different input ports of the wavelength selective switch 41. In addition, in the embodiment, an optical signal output from the multiplexer (MUX) for accommodating a client circuit is also guided to the wavelength selective switch 41. The multiplexer corresponds to, for example, the MUXs 15a and 15b illustrated in FIG. 2. Furthermore, when the optical transmission equipment 1 is used in the internetwork relay station (HUB) illustrated in FIG. 1, an optical signal received from another network is also guided to the wavelength selective switch 41. The wavelength selective switch 41 selects a specified wavelength channel from each of the input optical signals. The wavelength channel selected by the wavelength selective switch 41 is specified by, for example, an administrator who manages or operates the network.

The optical amplifier (TAMP) 42 includes an EDFA, and amplifies the optical signal in which the wavelength channels selected by the wavelength selective switch 41 are multiplexed. The optical signal amplified by the optical amplifier 42 is output to the optical transmission line. That is, the optical amplifier 42 operates as a transmitter amplifier.

The optical transmission equipment 1 includes a dispersion compensator such as a dispersion compensation fiber etc. when the chromatic dispersion of the optical transmission line can be compensated for by the dispersion compensator. In the description below, when the transmission rate of the optical signal is 10 Gbit/s or less, it is assumed that the chromatic dispersion of the optical transmission line can be compensated for by the dispersion compensation fiber. That is, when the optical transmission equipment 1 is used in an optical network in which the transmission rate of the optical signal is 10 Gbit/s or less, the optical transmission equipment 1 includes a dispersion compensation fiber.

On the other hand, when the transmission rate of an optical signal is very high, it is difficult to compensate for the chromatic dispersion of the optical transmission line by an optical device such as dispersion compensation fiber. Therefore, a system of compensating for chromatic dispersion by digital signal processing in a receiver, not compensating for the chromatic dispersion using the optical device on a transmission line, has been developed for the optical network in which the transmission rate of an optical signal is very high (for example, a baud rate of about 20 Gbaud through 25 Gbaud). Therefore, when the optical transmission equipment 1 is used in an optical network in which the baud rate of an optical signal is about 20 Gbaud through 25 Gbaud, it is not necessary for the optical transmission equipment 1 to include a dispersion compensation fiber. For example, if the baud rate is 20 Gbaud in the QPSK system, the transmission rate of the optical signal corresponds to 40 Gbit/s. If the baud rate is 25 Gbaud in the 16PSK system, the transmission rate of the optical signal corresponds to 100 Gbit/s.

The optical transmission equipment 1 according to the first embodiment provides a configuration with a dispersion compensation fiber and a configuration without a dispersion compensation fiber. That is, the optical transmission equipment 1 provides a configuration for transmitting 10 Gbit/s signal and a configuration for transmitting a signal of the baud rate of about 20 Gbaud through 25 Gbaud. These two configurations are realized by changing the optical device 33 implemented in the optical module 30.

That is, in the optical transmission equipment 1 illustrated in FIG. 4, the optical device 33 is selected depending on the transmission rate (or baud rate) of an optical signal. For example, when the transmission rate of the optical signal is 10 Gbit/s and the chromatic dispersion of the optical transmission line can be compensated for by a dispersion compensator such as a dispersion compensation fiber (DCF) etc., the dispersion compensation fiber is used as the optical device 33.

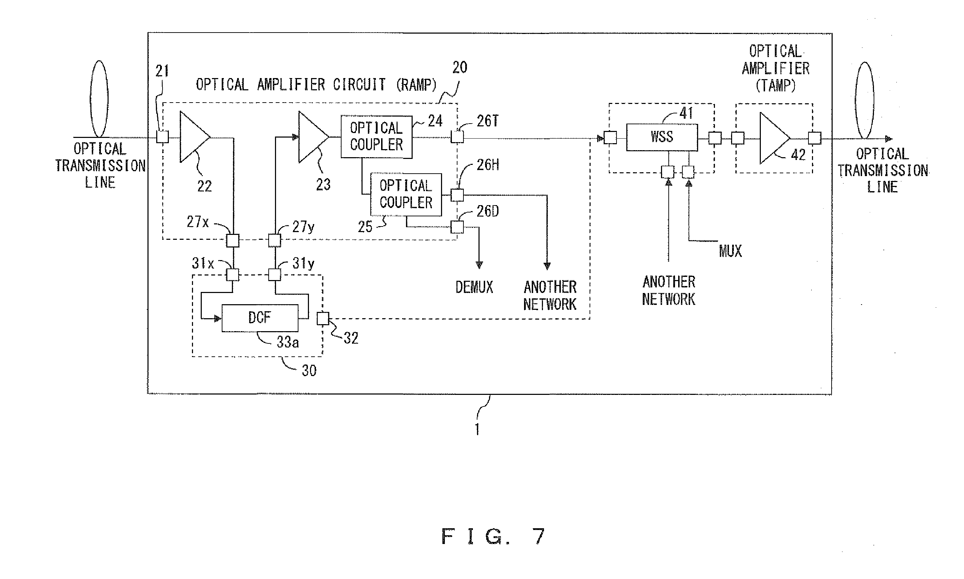

FIG. 7 illustrates an optical transmission equipment according to the first embodiment when the dispersion compensation fiber is implemented. A dispersion compensation fiber 33a is implemented in the optical module 30. Practically, the dispersion compensation fiber 33a is optically coupled between the relay ports 31x and 31y.

In the optical transmission equipment illustrated in FIG. 7, the optical signal amplified by the first stage optical amplifier 22 passes through the dispersion compensation fiber 33a in the optical module 30, and then guided to the second stage optical amplifier 23. Then, the optical signal amplified by the second stage optical amplifier 23 is split by the optical couplers 24 and 25, and output through the THROUGH port 26T, the HUB port 26H, and the DROP port 26D.

When the dispersion compensation fiber 33a is used as the optical device 33, the optical signal output through the THROUGH port 26T is guided to the wavelength selective switch 41. That is, the optical signal output from the optical module 30 is guided to the wavelength selective switch 41 after it is amplified by the second stage optical amplifier 23. The wavelength selective switch 41 selects a specified wavelength channel from the optical signal output through the THROUGH port 26T of the optical amplifier circuit 20. Then, the optical amplifier 42 amplifies the optical signal output from the wavelength selective switch 41.

Since the optical signal output through the HUB port 26H and the DROP port 26D and the optical signal guided from another network and multiplexer to the wavelength selective switch 41 are not directly affected by the configuration of the optical module 30, the detailed descriptions are omitted here.

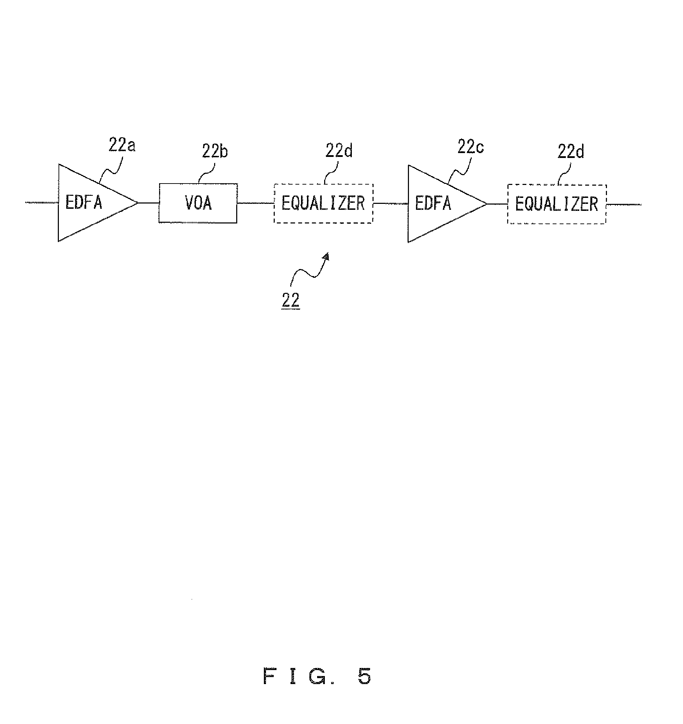

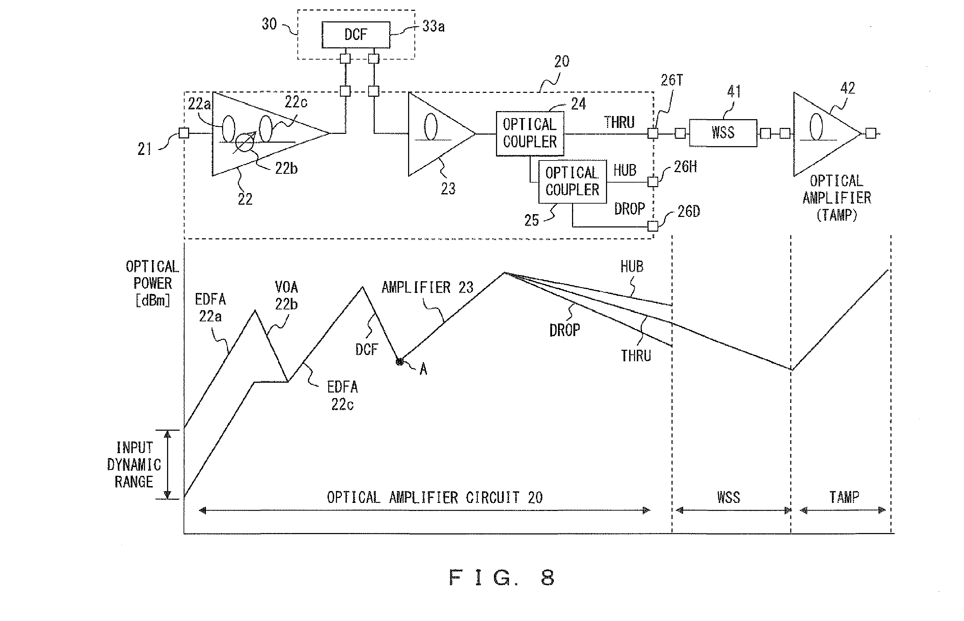

FIG. 8 is an optical level diagram in the optical transmission equipment illustrated in FIG. 7. The horizontal axis of the diagram indicates the position on the optical path in the optical transmission equipment 1, and the vertical axis indicates the power of the optical signal. It is assumed that the optical transmission equipment 1 has a specified input dynamic range, and the optical transmission equipment 1 receives an optical signal in the input dynamic range. It is also assumed that the first stage optical amplifier 22 includes the EDFA 22a, the variable optical attenuator 22b, the EDFA 22c, and the equalizer 22d as illustrated in FIG. 5. However, in the diagram illustrated in FIG. 8, it is assumed that the influence of the equalizer 22d is ignored.

The EDFA 22a amplifies the input optical signal. The gain of the EDFA 22a is not specifically restricted, but is fixed. The variable optical attenuator 22b adjusts the power of the optical signal output from the EDFA 22a. In this case, the variable optical attenuator 22b controls the amount of attenuation in such a way that the output power of the variable optical attenuator 22b is kept constant at specified power. That is, the power of the optical signal output from the variable optical attenuator 22b does not depend on the input level at the optical transmission equipment 1, but is controlled so that it maintains a substantially constant value.

The EDFA 22c amplifies the optical signal output from the variable optical attenuator 22b. It is assumed that the gain of the EDFA 22c is not restricted, but is fixed. The optical signal output from the EDFA 22c is guided to the dispersion compensation fiber 33a in the optical module 30.

The optical signal is attenuated when it passes through the dispersion compensation fiber 33a. The attenuation rate of the dispersion compensation fiber 33a is much higher than that of the optical fiber of the transmission line. Therefore, the power of the optical signal is considerably reduced when the optical signal passes through the dispersion compensation fiber 33a. The loss in the dispersion compensation fiber 33a depends on the level of the chromatic dispersion to be compensated for, but is, for example, about 10dB.

The second stage optical amplifier 23 amplifies the optical signal output from the dispersion compensation fiber 33a. It is assumed that the gain of the second stage optical amplifier 23 is not specifically restricted, but is fixed. The optical signal output from the second stage optical amplifier 23 is split by the optical couplers 24 and 25, and guided to the THROUGH port 26T, the HUB port 26H, and the DROP port 26D. In this example, the split ratios of the optical couplers 24 and 25 are designed so that the power of the optical signal output through the HUB port 26H is the highest, and the power of the optical signal output through the DROP port 26D is the lowest.

The wavelength selective switch 41 selects a specified wavelength channel from the optical signal (THRU) output through the THROUGH port 26T. In this case, the power of the optical signal is reduced. The optical amplifier 42 amplifies the optical signal output from the wavelength selective switch 41.

Thus, when the chromatic dispersion of the optical transmission line is compensated for by the dispersion compensation fiber 33a, the power of the optical signal is considerably reduced in the dispersion compensation fiber 33a. The optical transmission equipment 1 is requested to transmit an optical signal with specified output power. Therefore, the optical amplifiers (the EDFA 22a, the EDFA 22c, the second stage optical amplifier 23, and the optical amplifier 42) of the optical transmission equipment 1 is designed so that the loss by the dispersion compensation fiber 33a can be compensated for. As an example, the optical transmission equipment 1 is designed so that the second stage optical amplifier 23 compensates for the loss by the dispersion compensation fiber 33a.

On the other hand, in the optical network of a very high transmission rate of the optical signal (for example, 40 Gbit/s through 100 Gbit/s or 20-30Gbaud), as described above, the chromatic dispersion is compensated for by the digital signal processing in a receiver. Therefore, when the transmission rate of the optical signal is very high, the optical transmission equipment 1 does not include a dispersion compensation fiber. However, if the transmission rate of the optical signal in the network is high, high OSNR is required in the receiver. Therefore, when the transmission rate of the optical signal is high, it is requested that the noise figure (NF) of the optical amplifier in the optical transmission equipment 1 is reduced.

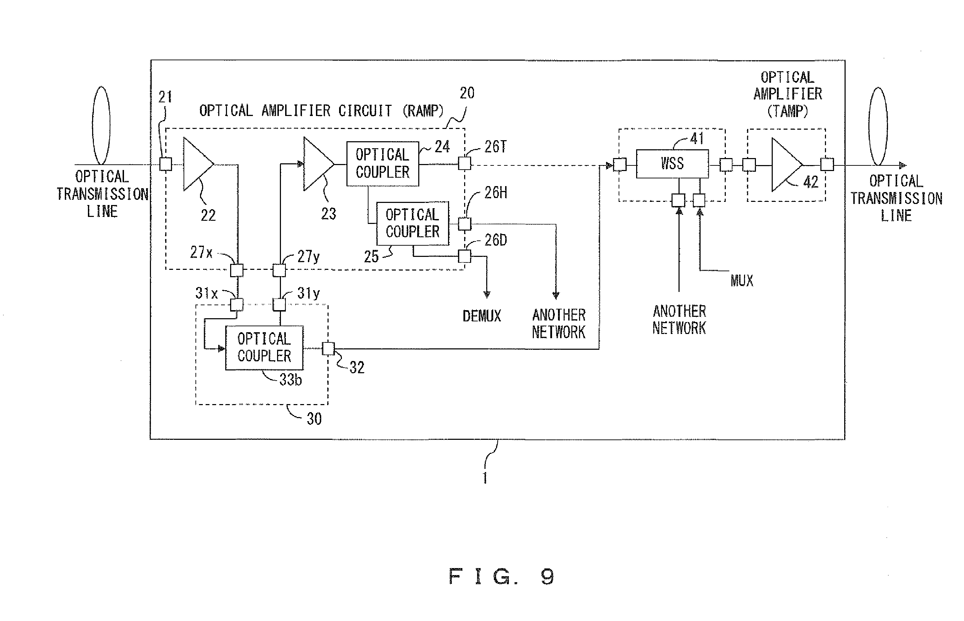

FIG. 9 illustrates the optical transmission equipment according to the first embodiment in which a dispersion compensation fiber is not implemented. In this case, in the optical module 30, an optical coupler 33b is implemented as the optical device 33. Practically, the relay port 32x is optically coupled to the input port of the optical coupler 33b. One output port of the optical coupler 33b is optically coupled to the output port 32. The other output port of the optical coupler 33b is optically coupled to the relay port 31y.

In the optical transmission equipment illustrated in FIG. 9, the optical signal amplified by the first stage optical amplifier 22 is guided to the optical coupler 33b. The optical coupler 33b splits the input optical signal and guides the optical signal to the output port 32 and the relay port 31y. That is, the optical coupler 33b operates as an optical splitter. The split ratio of the optical coupler 33b is designed so that the power of the optical signal guided to the output port 32 is higher than the power of the optical signal guided to the relay port 31y. For example, the split ratio of the optical coupler 33b is 10:1. In this case, the power of the optical signal guided to the output port 32 is slightly lower than the input power to the optical coupler 33b. On the other hand, the power of the optical signal guided to the relay port 31y is much lower than the input power to the optical coupler 33b.

The optical signal output through the output port 32 of the optical module 30 is guided to the wavelength selective switch 41. That is, the optical signal output through the output port 32 is guided to the wavelength selective switch 41 without being amplified by the second stage optical amplifier 23. The wavelength selective switch 41 selects a specified wavelength channel from the optical signal output through the output port 32.

The optical signal output through the relay port 31y of the optical module 30 is guided to the second stage optical amplifier 23. The second stage optical amplifier 23 amplifies the optical signal output through the relay port 31y. The optical signal output from the second stage optical amplifier 23 is guided to the THROUGH port 26T, the HUB port 26H, and the DROP port 26D as with the configuration illustrated in FIG. 7. However, in the configuration illustrated in FIG. 9, the optical signal of the THROUGH port 26T is not guided to the wavelength selective switch 41. The optical signal selected by the wavelength selective switch 41 is output to the optical transmission line after being amplified by the optical amplifier 42.

Thus, in the first embodiment, when the optical coupler 33b is implemented in the optical module 30, the optical transmission equipment 1 outputs the optical signal not amplified by the second stage optical amplifier 23 (that is, the optical signal output through the output port 32 of the optical module 30) to the optical transmission line. In addition, the optical transmission equipment 1 guides the optical signal amplified by the second stage optical amplifier 23 to a client circuit and/or another reconfigurable optical add/drop multiplexer belonging to another optical network.

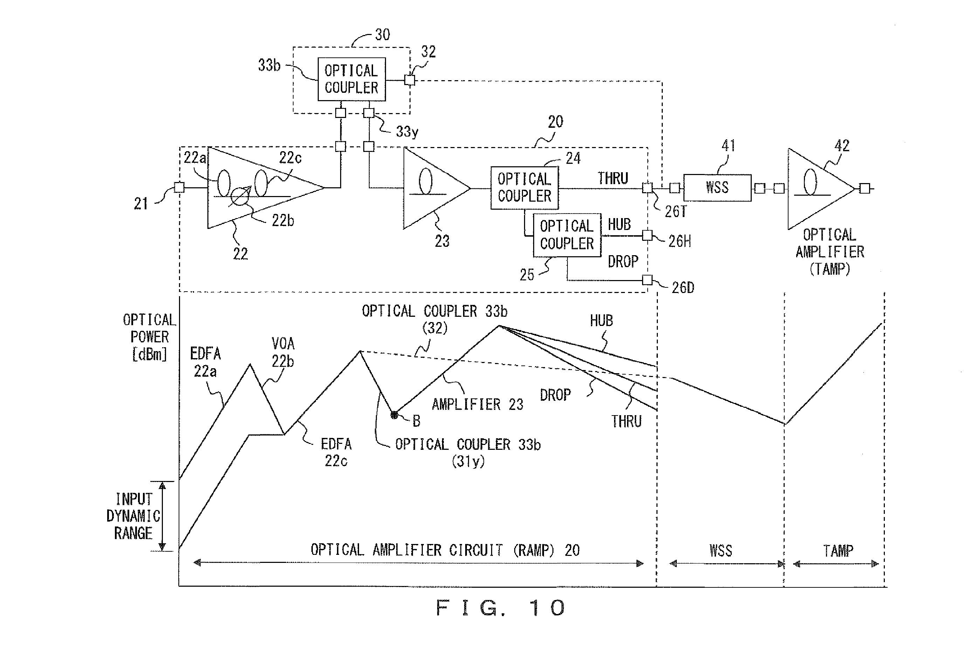

FIG. 10 is an optical level diagram in the optical transmission equipment illustrated in FIG. 9. In FIG. 10, the level change by the EDFA 22a, the variable optical attenuator 22b, and the EDFA 22c is substantially the same as that in the example illustrated in FIG. 8. The optical signal output from the EDFA 22c is guided to the optical coupler 33b.

The optical coupler 33b splits the optical signal amplified by the EDFA 22c, and guides the optical signal to the output port 32 and the relay port 31y, as described above. In this case, the power of the optical signal output through the output port 32 is slightly lower than the input power to the optical coupler 33b as indicated by the broken line in FIG. 10. On the other hand, the power of the optical signal output from the relay port 31y is much lower than the input power to the optical coupler 33b as indicated by the solid line in FIG. 10.

For example, the power of the optical signal output from the relay port 31y is substantially equal to the power of the optical signal output from the dispersion compensation fiber 33a in the optical transmission equipment 1 illustrated in FIG. 7. In this case, the power at the point B illustrated in FIG. 10 is approximately equal to the power at the point A illustrated in FIG. 8. In other words, the loss of the optical path from the relay port 31x to the relay port 31y through the optical coupler 33b in the optical module 30 is approximately equal to the loss by the dispersion compensation fiber 33a illustrated in FIG. 7.

The optical signal output from the relay port 31y is amplified by the second stage optical amplifier 23, and then guided to the THROUGH port 26T, the HUB port 26H, and the DROP port 26D. The level change by the second stage optical amplifier 23, and the optical couplers 24 and 25 in FIG. 10 is substantially the same as the level change in the example illustrated in FIG. 8. Therefore, if it is assumed that the power at the point B in FIG. 10 is approximately equal to the power at the point A illustrated in FIG. 8, the output power of the THROUGH port 26T, the HUB port 26H, and the DROP port 26D in the configuration illustrated in FIG. 9 is approximately equal to the corresponding output power in the configuration illustrated in FIG. 7.

As described above, in the first embodiment, the optical device 33 implemented in the optical module 30 is determined depending on the transmission rate of the optical signal. For example, when the optical transmission equipment 1 is used in the optical network for transmitting 10 Gbit/s signal, the dispersion compensation fiber 33a is implemented in the optical module 30 as illustrated in FIG. 7. On the other hand, when the optical transmission equipment 1 is used in the optical network in which baud rate of the optical signal is 20 Gbaud through 25 Gbaud, the optical coupler 33b is implemented in the optical module 30 as illustrated in FIG. 9.

In this case, it is preferable that the optical transmission equipment 1 satisfies the following policy 1.

Policy 1: The gain or loss of an optical path from the relay port 31y through the dispersion compensation fiber 33a, the second stage optical amplifier 23, and the optical coupler 24 to the input port of the wavelength selective switch 41 in FIG. 7 is approximately equal to the gain or loss of an optical path from the relay port 31y through the optical coupler 33b and the output port 32 to the input port of the wavelength selective switch 41 in FIG. 9.

Furthermore, in the optical transmission equipment illustrated in FIG. 7, the optical signal output from the first stage optical amplifier 22 passes through the dispersion compensation fiber 33a, and is then amplified by the second stage optical amplifier 23. On the other hand, in the optical transmission equipment illustrated in FIG. 9, the optical signal output from the first stage optical amplifier 22 is guided to the wavelength selective switch 41 without being amplified by the second stage optical amplifier 23. That is, in FIG. 9, the optical signal guided to the wavelength selective switch 41 is not amplified by the second stage optical amplifier 23. Therefore, according to the first embodiment, the following policy 2 is realized by replacing the dispersion compensation fiber 33a with the optical coupler 33b. Policy 2: Since it is not necessary to compensate for the loss by the dispersion compensation fiber 33a in the optical transmission equipment illustrated in FIG. 9, the gain of the optical amplifier is smaller than the gain in the optical transmission equipment illustrated in FIG. 7.

As described above, when the transmission rate or baud rate becomes higher from 10 Gbit/s to about 20 Gbit/s, the dispersion compensation fiber 33a is removed in the optical transmission equipment 1. However, if the optical amplifier is not changed in FIG. 4, and the dispersion compensation fiber 33a is replaced with an optical fiber of a lower attenuation rate, then the power of the optical signal becomes too high.

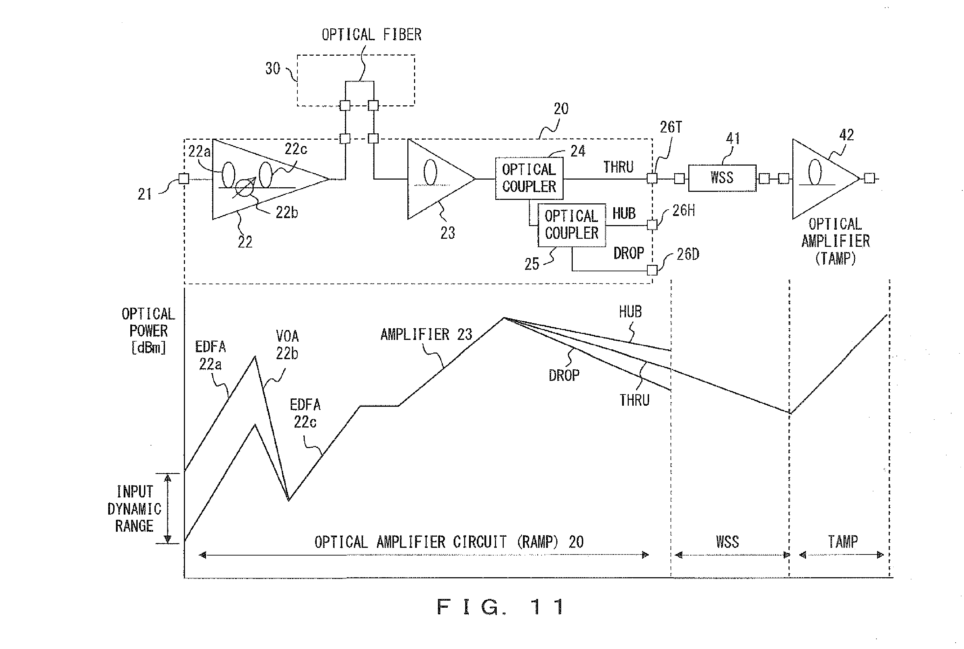

In the optical transmission equipment in which the dispersion compensation fiber 33a is replaced with an optical fiber of a lower attenuation rate, for example, the following two methods are considered to suppress the power of the optical signal within a specified range.
(1) As illustrated in FIG. 11, the amount of attenuation of the variable optical attenuator 22b is increased.
(2) An optical attenuator for generating a loss approximately equivalent to that of the dispersion compensation fiber 33a is added.

However, in the above methods (1) and (2), the input optical signal to the optical transmission equipment 1 is amplified by the first stage optical amplifier 22 and the second stage optical amplifier 23. Therefore, the methods (1) and (2) do not improve the NF in the optical transmission equipment 1 compared with the optical transmission equipment in FIG. 7.

On the other hand, in the first embodiment, when the transmission rate is high, the input optical signal to the optical transmission equipment 1 is amplified by the first stage optical amplifier 22 but is not amplified by the second stage optical amplifier 23, as illustrated in FIG. 9. That is, with the configuration illustrated in FIG. 9, as compared with the methods (1) and (2) above, the output power of the optical signal is approximately the same, the number of the optical amplifiers for amplifying the optical signal can be reduced, thereby improving the NF in the optical transmission equipment 1. In this case, although the NF depends on the input level of each optical amplifier, the NF is reduced by about 0.5 dB.

Thus, the optical transmission equipment 1 according to the first embodiment can be used in an optical network for transmitting 10 Gbit/s signal or in an optical network for transmitting 20-25 Gbaud signal by selecting the optical device 33 implemented in the optical module 30. That is, according to the first embodiment, it is not necessary to replace the optical amplifier provided for the optical transmission equipment in improving a 10 Gbit/s system to a 20-25 Gbaud system. In addition, when the dispersion compensation fiber 33a is replaced with the optical coupler 33b in the optical module 30, the NF is lower and the OSNR is improved. That is to say, in the optical network in which transmission rate is high, the number of the amplifiers actually amplifying the optical signal is reduced, thus OSNR is improved.

In the embodiment illustrated in FIGS. 4 through 11, the optical transmission equipment 1 is applied to the reconfigurable optical add/drop multiplexer 101 (or the internetwork relay station 103) illustrated in FIG. 1. However, the optical transmission equipment 1 according to the first embodiment can be used as the relay station 102 illustrated in FIG. 1.

### <Second Embodiment>

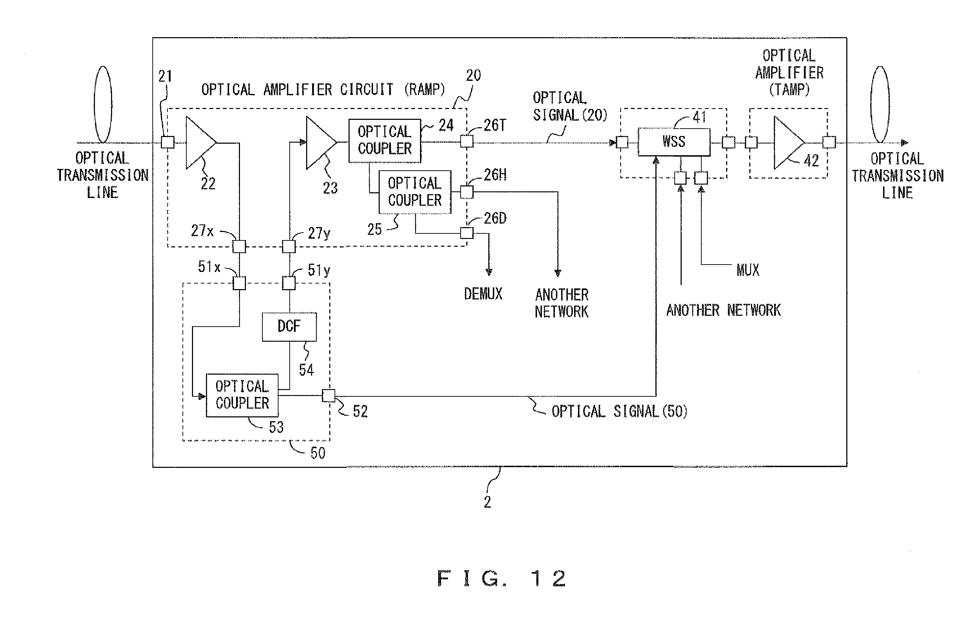

FIG. 12 illustrates a configuration of the optical transmission equipment according to the second embodiment. An optical transmission equipment 2 illustrated in FIG. 12 operates as the reconfigurable optical add/drop multiplexer (ROADM) 101 illustrated in FIG. 1.

The optical transmission equipment 2 is used in the optical network for transmitting a WDM optical signal. The WDM optical signal may include optical signals having different transmission rates. In the example below, it is assumed that the WDM optical signal includes an optical signal of 10 Gbit/s signal and an optical signal of about 20 Gbaud.

The optical transmission equipment 2 includes the optical amplifier circuit 20, an optical module 50, the wavelength selective switch 41, and the optical amplifier 42. Since the optical amplifier circuit 20, the wavelength selective switch 41, and the optical amplifier 42 are substantially the same as those according to the first embodiment, the detailed description is omitted here.

The optical module 50 includes relay ports 51x and 51y, a THROUGH port 52, an optical coupler 53, and a dispersion compensation fiber 54. The relay ports 51x and 51y are optically coupled to the relay ports 27x and 27y of the optical amplifier circuit 20, respectively, as with the relay ports 31x and 31y. That is, the optical signal output from the first stage optical amplifier 22 is fed to the optical module 50 through the relay port 51x. The optical signal output through the relay port 51y is guided to the second stage optical amplifier 23.

The input optical signal to the optical module 50 is guided to the optical coupler 53. That is, the optical signal output from the first stage optical amplifier 22 is guided to the optical coupler 53 through the relay port 27y and the relay port 51x.

The optical coupler 53 splits the input optical signal and guides the optical signal to the THROUGH port 52 and the dispersion compensation fiber 54. That is, the optical coupler 53 operates as an optical splitter. The split ratio of the optical coupler 53 is designed so that the power of the optical signal guided to the THROUGH port 52 is lower than the power of the optical signal guided to the dispersion compensation fiber 54. As an example the split ratio of the optical coupler 53 is 1:10. In this case, the power of the optical signal guided to the THROUGH port 52 is much lower than the input power to the optical coupler 53. On the other hand, the power of the optical signal guided to the dispersion compensation fiber 54 is slightly lower than the input power to the optical coupler 53.

One output optical signal of the optical coupler 53 passes through the dispersion compensation fiber 54. At this time dispersion compensation fiber 54 compensates for the chromatic dispersion of the optical transmission line. The optical signal output from the dispersion compensation fiber 54 is guided to the second stage optical amplifier 23 through the relay port 51y and the relay port 27y. The optical signal output through the THROUGH port 52 is guided to the wavelength selective switch 41.

The second stage optical amplifier 23 amplifies the optical signal output from the optical module 50. The optical signal amplified by the second stage optical amplifier 23 is guided to the THROUGH port 26T, the HUB port 26H, and the DROP port 26D by the optical couplers 24 and 25. The optical signal output through the THROUGH port 26T is guided to the wavelength selective switch 41.

Thus, the optical signal output through the THROUGH port 52 of the optical module 50 (hereafter referred to as an optical signal (50)), and the optical signal output through the THROUGH port 26T of the optical amplifier circuit 20 (hereafter referred to as an optical signal (20)) are guided to the wavelength selective switch 41. The description of the optical signals guided from the multiplexer and another network is omitted.

In the second embodiment, the input optical signal of the optical transmission equipment 1 is a WDM optical signal. Therefore, both of the optical signal (50) and the optical signal (20) are WDM optical signals. However, the optical signal (50) is guided to the wavelength selective switch 41 without passing through the dispersion compensation fiber 54. On the other hand, the optical signal (20) is guided to the wavelength selective switch 41 after passing through the dispersion compensation fiber 54.

The wavelength selective switch 41 selects a specified wavelength channel from the optical signal (50) and from the optical signal (20). However, the wavelength selective switch 41 selects the wavelength channel for transmitting 20 Gbaud signal from the optical signal (50). In addition, the wavelength selective switch 41 selects the wavelength channel for transmitting 10 Gbit/s signal from the optical signal (20).

For example, it is assumed that the wavelengths λ1-λ20 are multiplexed into the input WDM optical signal. In addition, it is assumed that wavelength channels for transmitting 20 Gbaud signal are assigned to λ1-λ10, and wavelength channels for transmitting 10 Gbit/s signal are assigned to λ11-λ20. In this case, the wavelength selective switch 41 selects a specified wavelength channel from among λ1-λ10 from the optical signal (50). In addition, the wavelength selective switch 41 selects a specified wavelength channel from among λ11-λ20 from the optical signal (20).

Thus, in the optical transmission equipment 2, the 10 Gbit/s optical signal is selected from the optical signal (20). That is, the 10 Gbit/s optical signal is selected from the WDM optical signal whose chromatic dispersion has been compensated for by the dispersion compensation fiber 54. On the other hand, the 20 Gbaud optical signal is selected from the optical signal (50). That is, the 20 Gbaud optical signal is selected from the WDM optical signal which does not pass through the dispersion compensation fiber 54. Therefore, according to the second embodiment, each optical signal can be appropriately transmitted although there are optical signals having different transmission rates are included in the WDM optical signal.

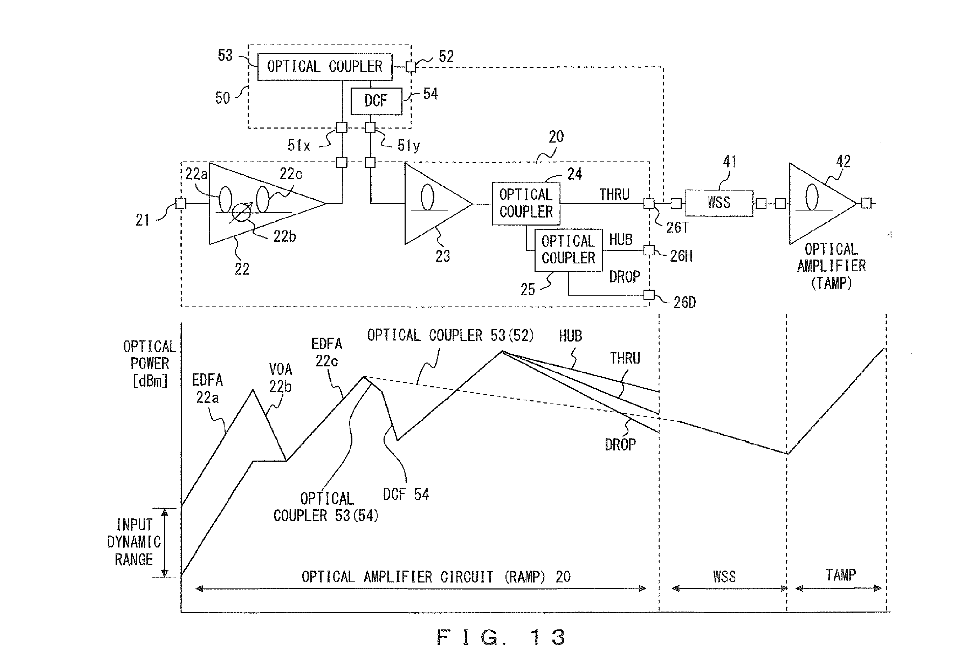

FIG. 13 is the optical level diagram in the optical transmission equipment according to the second embodiment. In FIG. 13, a level change made by the EDFA 22a, the variable optical attenuator 22b, and the EDFA 22c is substantially the same as in the example illustrated in FIG. 8. Then, the optical signal output from the EDFA 22c is guided to the optical coupler 53.

The optical coupler 53 splits the optical signal amplified by the EDFA 22c, and guides the optical signal to the THROUGH port 52 and the dispersion compensation fiber 54. The power of the optical signal (50) output through the THROUGH port 52 is reduced by the loss depending on the split ratio of the optical coupler 53 as indicated by the broken line in FIG. 13. Note that "optical coupler 53(52)" in FIG. 13 indicates loss from the relay terminal 51x to the THROUGH port 52, and "optical coupler 53(54)" indicates loss from the relay terminal 51x to the dispersion compensation fiber 54.

The optical signal guided from the optical coupler 53 to the dispersion compensation fiber 54 passes through the dispersion compensation fiber 54. In this case, a loss occurs in the dispersion compensation fiber 54. Then, the optical signal output from the dispersion compensation fiber 54 is amplified by the second stage optical amplifier 23, and further guided to the wavelength selective switch 41 by the optical coupler 24.

The split ratio of the optical coupler 53 is determined by the restrictions of the optical level in the optical transmission equipment 2. For example, the split ratio of the optical coupler 53 is determined so that the power difference between the optical signal (20) and the optical signal (50) is smaller than a specified level. When the chromatic dispersion to be compensated for in the dispersion compensation fiber 54 is large, the dispersion compensation fiber 54 is long, thereby increasing the loss in the dispersion compensation fiber 54. In this case, it is preferable that the ratio of the power of the optical signal to be guided to the dispersion compensation fiber 54 is enhanced.

Thus, the optical transmission equipment 2 according to the second embodiment appropriately transmits each optical signal although there are optical signals having different transmission rates are included in the WDM optical signal. The chromatic dispersion of the 10 Gbit/s signal selected by the wavelength selective switch 41 is compensated for by the dispersion compensation fiber 54. That is, the chromatic dispersion of the 10 Gbit/s signal is compensated for in the optical transmission equipment 2. On the other hand, since the 20 Gbaud signal selected by the wavelength selective switch 41 is not amplified by the second stage optical amplifier 23, the NF of the 20 Gbaud signal is improved. As a result, since the OSNR of the 20 Gbaud signal is improved in a receiver, the accuracy of the chromatic dispersion compensation using the digital signal processing is enhanced.

### <Third Embodiment>

As described above with respect to the first and second embodiments, in the high-speed optical network in which the chromatic dispersion is compensated for by the digital signal processing in a receiver, it is not necessary for an optical transmission equipment to have a dispersion compensator. Therefore, for example, when the optical network is enhanced from a 10 Gbit/s system to a 20-25 Gbaud system, the dispersion compensator is removed to reduce an optical loss in each optical transmission equipment.

On the other hand, when the transmission rate increases, the signal level deviation with respect to wavelength caused by the gain tilt of an optical amplifier provided for each optical transmission equipment easily has an influence on the reception sensitivity. Although the dispersion compensator is removed from the optical transmission equipment as described above, the signal level deviation is not necessarily improved. However, by removing the dispersion compensator, a space for implementing another optical device is reserved in the optical transmission equipment. Thus, the optical transmission equipment according to the third embodiment includes a circuit for adjusting the gain deviation in place of the dispersion compensator.

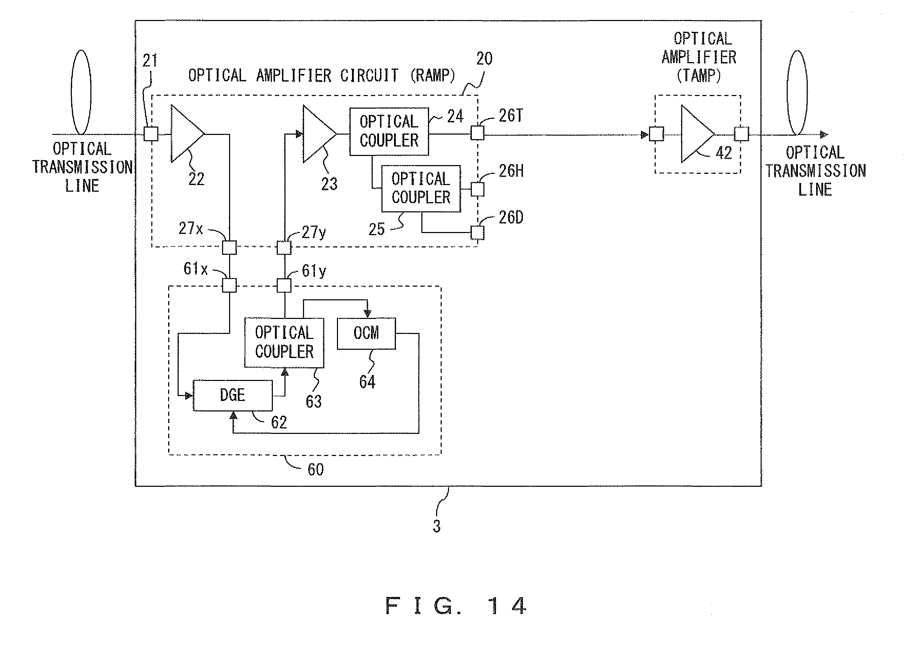

FIG. 14 illustrates a configuration of the optical transmission equipment according to the third embodiment. An optical transmission equipment 3 illustrated in FIG. 14 operates, for example, as the relay station (ILA) 102 illustrated in FIG. 1. The optical transmission equipment 3 is used in an optical network for transmitting a WDM optical signal.

The optical transmission equipment 3 includes the optical amplifier circuit (RAMP) 20, an optical module 60, and the optical amplifier (TAMP) 42. Since the optical amplifier circuit 20 and the optical amplifier 42 are substantially the same as those according to the first embodiment, the detailed description is omitted here.

The optical module 60 has relay ports 61x and 61y. The relay ports 61x and relay port 61y are optically coupled to the relay ports 27x and 27y of the optical amplifier circuit 20, respectively. That is, the optical signal amplified by the first stage optical amplifier 22 is input to the optical module 30 through the relay port 61x. In addition, the optical signal output from the optical module 30 is guided to the second stage optical amplifier 23 through the relay port 61y.

When the optical transmission equipment 3 is used in the optical network for transmitting a 10 Gbit/s signal, a dispersion compensation fiber is implemented in the optical module 60 although not illustrated in the attached drawings. In this case, the dispersion compensation fiber is optically coupled between the relay ports 61x and 61y. That is, the optical signal output from the first stage optical amplifier 22 passes through the dispersion compensation fiber on the optical module 60, and is then guided to the second stage optical amplifier 23.

When the optical transmission equipment 3 is used in an optical network for transmitting 20-25 Gbaud signal, the optical module 60 includes a gain equalizer (dynamic gain equalizer (DGE)) 62, an optical coupler 63, and an optical channel monitor (OCM) 64 in place of the dispersion compensation fiber. The optical signal input through the relay port 61x is guided to the gain equalizer 62.

The gain equalizer 62 equalizes the optical signal (WDM optical signal) amplified by the first stage optical amplifier 22. The gain equalizer 62 includes an optical filter capable of individually adjusting the power of each wavelength channel multiplexed into the WDM optical signal. The gain equalizer 62 individually adjusts the power of each wavelength channel multiplexed into the WDM optical signal under the control of the optical channel monitor 64.

The optical coupler 63 splits the optical signal output from the gain equalizer 62, and guides the optical signal to the relay port 61y and the optical channel monitor 64. That is, the optical coupler operates as an optical splitter. In this case, it is assumed that the power of the optical signal guided to the optical channel monitor 64 is sufficiently smaller than the power of the optical signal guided to the relay port 61y.

The optical channel monitor 64 monitors the power of each wavelength channel of the optical signal (WDM optical signal) output from the gain equalizer 62. Then, the optical channel monitor 64 gives a control signal to the gain equalizer 62 so that the power of each wavelength channel can be equalized. The power of the wavelength channels of the WDM optical signal is controlled to be equalized by this feedback system.

The optical signal output from the gain equalizer 62 is guided to the second stage optical amplifier 23 through the relay port 61y and the relay port 27y. The second stage optical amplifier 23 amplifies the optical signal output from the gain equalizer 62. The optical amplifier 42 further amplifies the optical signal output from the second stage optical amplifier 23.

In the example illustrated in FIG. 14, the optical couplers 24 and 25 are provided on the output side of the second stage optical amplifier 23, but it is not necessary for the optical transmission equipment 3 to be provided with the optical couplers 24 and 25. In addition, in the example illustrated in FIG. 14, the optical signal output from the second stage optical amplifier 23 is amplified by the optical amplifier 42, but it is not necessary for the optical transmission equipment 3 to be provided with the optical amplifier 42.

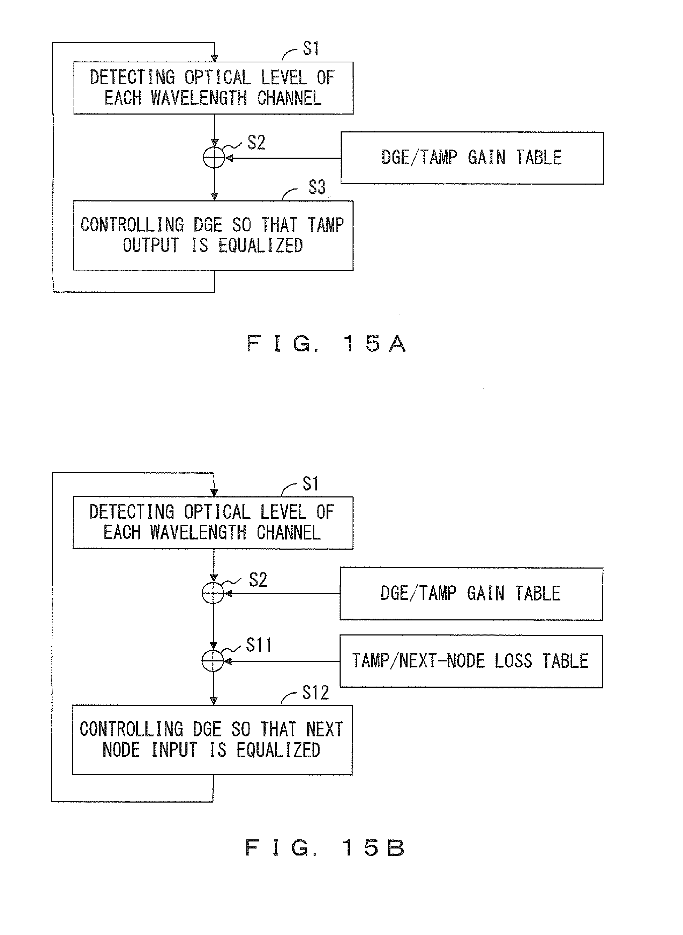

FIGS. 15A and 15B are flowcharts of the gain control in the optical transmission equipment 3 illustrated in FIG. 14. The process in the flowchart is performed by, for example, the optical channel monitor 64. In addition, the process in the flowchart is, for example, repeatedly performed periodically.

Furthermore, in the following explanation, it is assumed that the WDM optical signal has multiplexed wavelength channels λ1 through λn.

The optical channel monitor 64 may include a processor and memory in addition to the photo detectors for detecting the power of each wavelength channel. In this case, the processor generates a control signal for control of the gain equalizer 62 by executing the program stored in the memory.

Insulin FIG. 15A, the optical channel monitor 64 detects the optical level Pi (i=l, 2, 3, ... , n) of each wavelength channel of the optical signal output from the gain equalizer 62. In this case, it is not always necessary for the gain equalizer 62 to detect the optical levels of all wavelength channels. The optical level of each wavelength channel is detected using, for example, a plurality of wavelength passing filters and a plurality of photo detectors.

In S2, the optical channel monitor 64 refers to a DGE/TAMP gain table. The DGE/TAMP gain table stores the gain data Gi (i=1,2,3, ... , n) indicating the gain (or loss) of the optical path from the output point of the gain equalizer (DGE) 62 to the output point of the optical amplifier (TAMP) 42 with respect to each of the wavelength channels λ1 through λn. It is assumed that the gain data stored in the DGE/TAMP gain table is obtained by a preliminary measurement or a simulation etc. Then, the optical channel monitor 64 calculates "Pi+Gi" for each of the wavelength channels λ1 through λn. Thus, an estimated value of the optical level for each of the wavelength channels λ1 through λn in the WDM optical signal output from the optical transmission equipment 3 is obtained.

In S3, the optical channel monitor 64 generates a control signal to control the estimated values "Pi+Gi" obtained in S2 are to be approximately equal to each other for the wavelength channels λ1 through λn. The control signal specifies, for example, the amount of attenuation for each wavelength channel. Then, the optical channel monitor 64 applies the generated control signal to the gain equalizer 62. Thus, the optical level of the WDM optical signal output from the optical transmission equipment 3 to the optical transmission line is equalized.

In the method illustrated in FIG. 15B, the process in S11 is performed after S2. In S11, the optical channel monitor 64 refers to the TAMP/next-node loss table. The TAMP/next-node loss table stores the loss data Li (i=1,2,3, ... , n) indicating the loss of an optical transmission line between the optical transmission equipment 3 and the next node provided on downstream side of the optical transmission equipment 3. It is assumed that the loss data stored in the TAMP/next-node loss table is obtained by a preliminary measurement or a simulation etc. The optical channel monitor 64 adds the loss data Li to the operation result in S2 for each of the wavelength channels λ1 through λn. That is, "Pi+Gi+Li" is calculated for each of the wavelength channels λ1 through λn. Note that "Li" indicates a negative value. Thus, an estimated value of the optical level at input port of the next node on the downstream side of the optical transmission equipment 3 is obtained for each of the wavelength channels λ1 through λn of the WDM optical signal.

Afterwards, in S12, the optical channel monitor 64 generates a control signal to control the estimated values "Pi+Gi+Li" obtained in S11 are to be approximately equal to each other for the wavelength channels λ1 through λn. Then, the optical channel monitor 64 applies the generated control signal to the gain equalizer 62. By so doing, the WDM optical signal input to the next node on the downstream side of the optical transmission equipment 3 is equalized. According to the method illustrated in FIG. 15B, the wavelength dependent characteristic of the optical transmission line may be canceled.

Thus, when the dispersion compensation fiber is not used, the optical transmission equipment 3 according to the third embodiment can equalize the WDM optical signal using the space for the dispersion compensation fiber. In this case, a loss occurs in the gain equalizer 62 and the optical coupler 63 implemented on the optical module 60. However, the loss caused by the gain equalizer 62 and the optical coupler 63 can be smaller than that by the dispersion compensation fiber. Therefore, when the dispersion compensation fiber is replaced by the gain equalizer 62 and the optical coupler 63, the output power of the optical signal is not reduced.

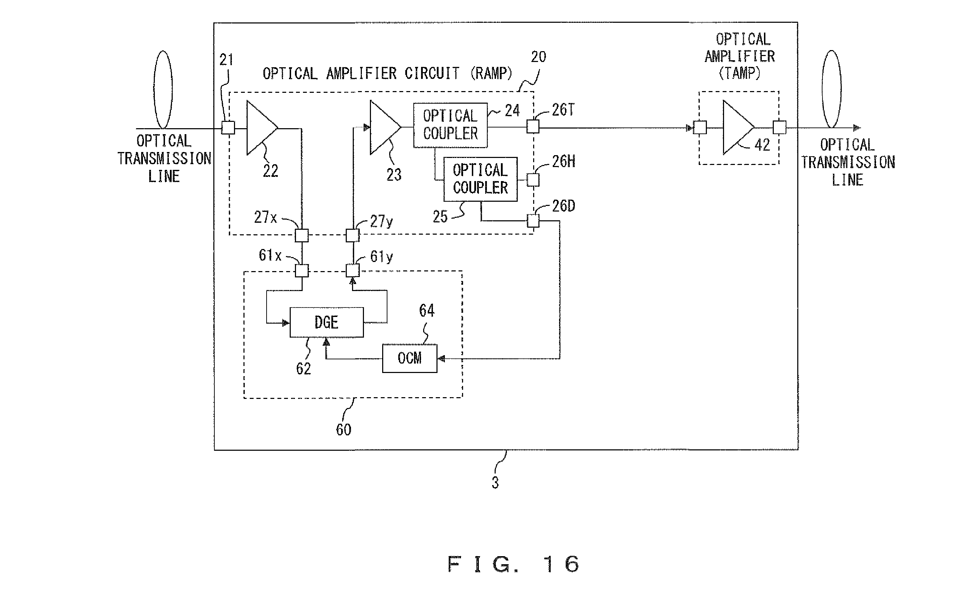

FIG. 16 illustrates another configuration of the optical transmission equipment according to the third embodiment. In the optical transmission equipment illustrated in FIG. 16, the gain equalizer 62 and the optical channel monitor 64 are implemented in the optical module 60.

The optical channel monitor 64 monitors the optical signal output from the second stage optical amplifier 23. That is, the optical channel monitor 64 substantially monitors the optical signal input to the optical amplifier (TAMP) 42. The optical signal output from the second stage optical amplifier 23 in this embodiment is split by the optical couplers 24 and 25, and guided to the optical channel monitor 64 through the DROP port 26D. However, the optical signal output through the HUB port 26H may be guided to the optical channel monitor 64. In addition, there may be only one optical coupler for splitting the optical signal output from the second stage optical amplifier 23.

The optical channel monitor 64 monitors the power of each wavelength channel in the WDM optical signal as in the embodiment illustrated in FIG. 14. Then, the optical channel monitor 64 applies a control signal to the gain equalizer 62 so that the power of each wavelength channel can be equalized.

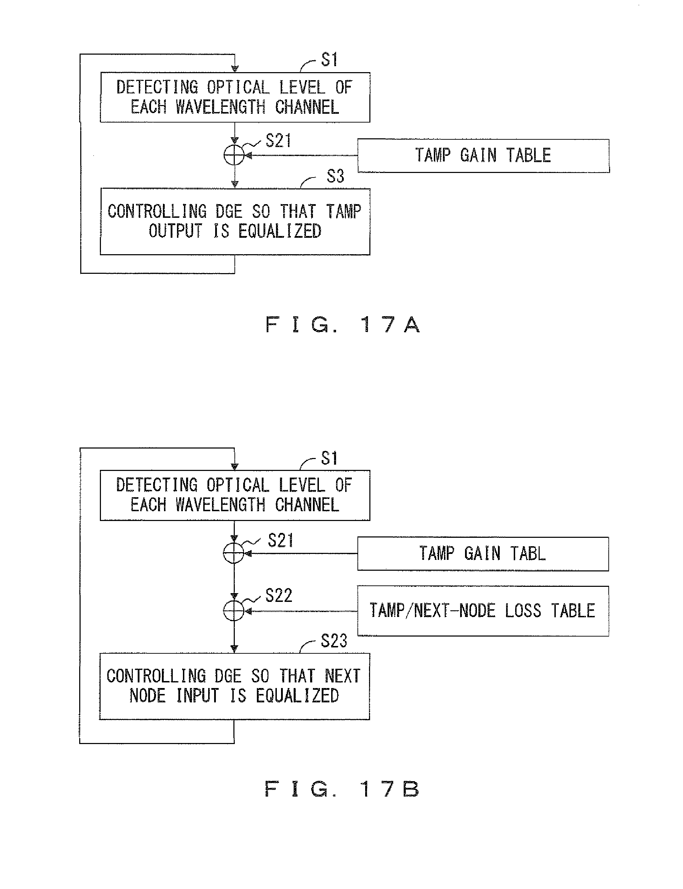

FIGS. 17A and 17B are flowcharts of the gain control in the optical transmission equipment 3 illustrated in FIG. 16. The procedures illustrated in FIGS. 17A and 17B are similar to the procedures illustrated in FIGS. 15A and 15B, respectively. However, in the procedures illustrated in FIGS. 17A and 17B, the process in S21 is performed instead of the process in S2.

In S21, the optical channel monitor 64 refers to the TAMP gain table. The TAMP gain table stores gain data indicating the gain in the optical amplifier (TAMP) 42 for each of the wavelength channels λ1 through λn. It is assumed that the gain data stored in the TAMP gain table is obtained by a preliminary measurement or a simulation etc. The optical channel monitor 64 adds the gain data extracted from the TAMP gain table to the detection result in S1, and obtains an optical level estimated value for each of the wavelength channels λ-1 through λn in the WDM optical signal output from the optical transmission equipment 3. The processes in S22 and S23 are substantially the same as those in S11 and S12 illustrated in FIG. 15B, respectively.

Thus, according to the configuration illustrated in FIG. 16, as compared with the configuration illustrated in FIG. 14, the gain control is performed based on the optical signal split at the position nearer to the output end of the optical transmission equipment 3. Thus, according to the configuration illustrated in FIG. 16, the accuracy of equalizing the WDM optical signal is improved.

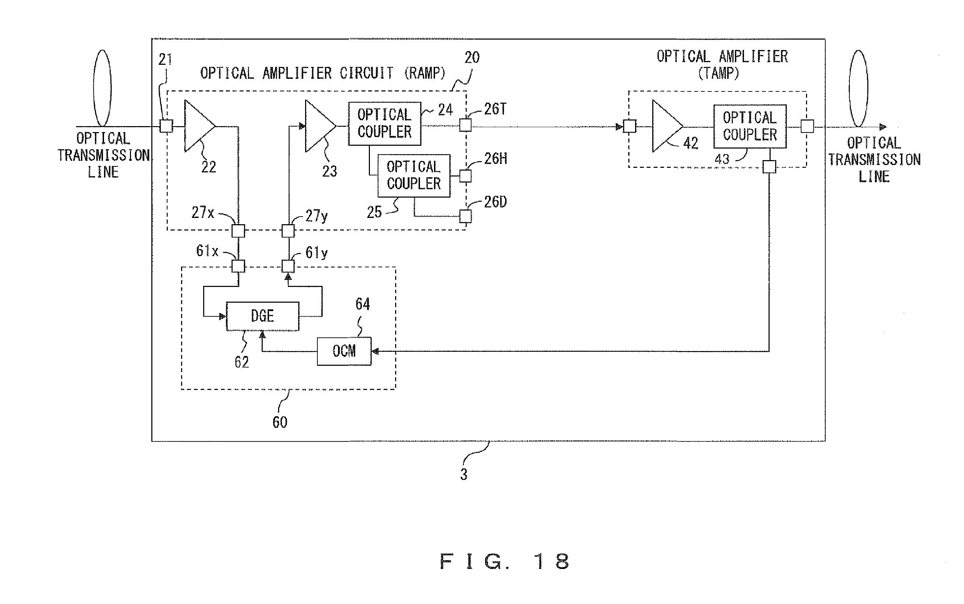

FIG. 18 illustrates still further configuration of the optical transmission equipment according to the third embodiment. In the optical transmission equipment illustrated in FIG. 18, an optical coupler 43 is provided at the output side of the optical amplifier (TAMP) 42. The optical signal split by the optical coupler 43 is guided to the optical channel monitor 64. That is, the optical channel monitor 64 controls the gain equalizer 62 according to the optical signal output from the optical amplifier (TAMP) 42.

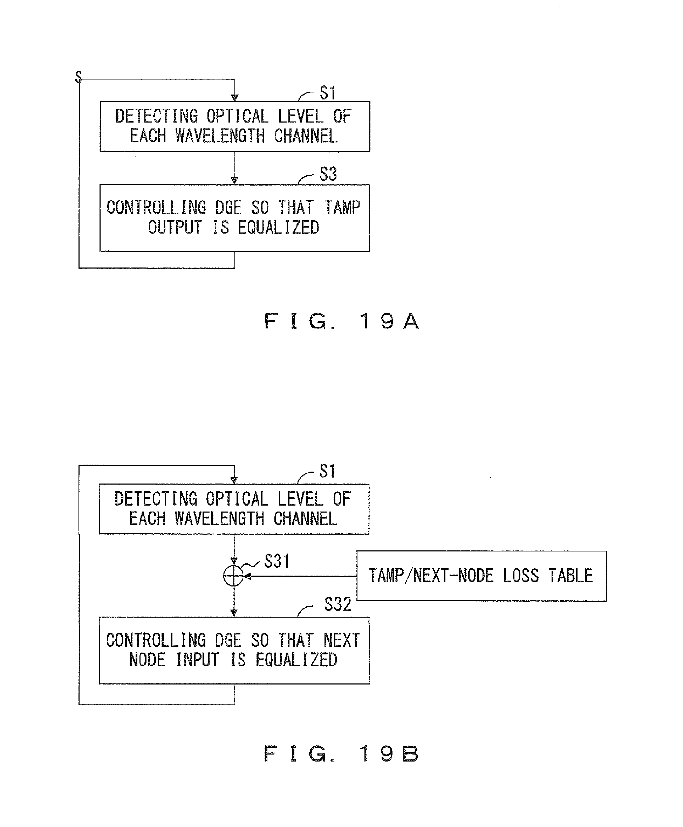

FIGS. 19A and 19B are flowcharts of the gain control in the optical transmission equipment 3 illustrated in FIG. 18. The procedures illustrated in FIGS. 19A and 19B are similar to those illustrated in FIGS. 15A and 15B. However, in the procedures illustrated in FIGS. 19A and 19B, the process in S2 is not performed. In the procedure illustrated in FIG. 19B, in S31, the loss data is added to the detection result in S1. In S32, the optical channel monitor 64 generates a control signal to control the gain equalizer 62 using the operation result in S31.

Thus, according to the configuration illustrated in FIG. 18, the gain control is performed based on the optical signal output from the optical transmission equipment 3. Therefore, according to the configuration illustrated in FIG. 18, the accuracy for equalizing the WDM optical signal is further improved.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions has (have) been described in detail, it should be understood that the various changes, substitutions, and alterations could be made hereto without departing from the spirit and scope of the invention.

## Claims

1. Optical transmission equipment, comprising:
a first optical amplifier (22) configured to amplify an input optical signal;
a second optical amplifier (23) provided at an output side of the first optical amplifier;
an optical module (30) having a first relay port (31x) configured to receive an optical signal from the first optical amplifier, a second relay port (31y) configured to output an optical signal to the second optical amplifier, an optical device (33) provided between the first relay port and the second relay port, and a first output port (32) optically couplable to the optical device; and
a second output port (26T) configured to output the optical signal amplified by the second optical amplifier.

2. The optical transmission equipment according to claim 1, wherein
the optical device is an optical splitter to generate a first and second split optical signals from the optical signal received through the first relay port,
the first split optical signal is guided to the first output port and the second split optical signal is guided to the second relay port in the optical module.

3. The optical transmission equipment according to claim 2, wherein
the optical splitter splits the optical signal received through the first relay port so that power of the first split optical signal is higher than power of the second split optical signal.

4. The optical transmission equipment according to claim 2, wherein
an optical transmission line and a client circuit are optically coupled to the optical transmission equipment,
the optical transmission equipment outputs the first split optical signal to the optical transmission line, and guides the second split optical signal to the client circuit.

5. The optical transmission equipment according to claim 2, wherein
an optical transmission line of a first optical network and another optical transmission equipment belonging to a second optical network are optically coupled to the optical transmission equipment,
the optical transmission equipment outputs the first split optical signal to the optical transmission line of the first optical network, and guides the second split optical signal to the other optical transmission equipment belonging to the second optical network.

6. The optical transmission equipment according to claim 1, wherein
the optical device is a dispersion compensator to compensate for chromatic dispersion,
an optical signal output from the dispersion compensator is guided to the second relay port in the optical module.

7. Optical transmission equipment, comprising:
a first optical amplifier (22) configured to amplify an input optical signal;
an optical splitter (53) configured to split the optical signal output from the first optical amplifier to generate first and second split optical signals;
a first output port (52) configured to output the first split optical signal;
a dispersion compensator (54) configured to compensate for chromatic dispersion of the second split optical signal;
a second optical amplifier (23) configured to amplify the optical signal output from the dispersion compensator; and
a second output port (26T) configured to output the optical signal amplified by the second optical amplifier.

8. The optical transmission equipment according to claim 7, wherein
the optical splitter splits the optical signal output from the first optical amplifier so that power of the second split optical signal is higher than power of the first split optical signal.

9. The optical transmission equipment according to claim 7, wherein
the input optical signal is a WDM optical signal,
the optical transmission equipment further comprises a wavelength selective switch to select an optical signal of a first wavelength in the first split optical signal output from the first output port, and to select an optical signal of a second wavelength in the second split optical signal output from the second output port.

10. Optical transmission equipment, comprising:
a first optical amplifier (22) configured to amplify an input WDM optical signal;
an equalizer (62) configured to control the WDM optical signal output from the first optical amplifier;
a second optical amplifier (23) configured to amplify the WDM optical signal controlled by the equalizer; and
a channel monitor (64) configured to monitor power of each channel of the WDM optical signal, wherein
the equalizer controls the WDM optical signal output from the first optical amplifier according to a monitor result obtained by the channel monitor.

11. The optical transmission equipment according to claim 10, further comprising
an optical splitter (63) provided between the equalizer and the second optical amplifier, wherein
the channel monitor monitors the WDM optical signal split by the optical splitter.

12. The optical transmission equipment according to claim 10, further comprising
an optical splitter (24, 25) configured to split the WDM optical signal output from the second optical amplifier, wherein
the channel monitor monitors the WDM optical signal split by the optical splitter.

13. The optical transmission equipment according to claim 10, further comprising:
a third optical amplifier (42) provided at an output side of the second optical amplifier; and
an optical splitter (43) configured to split the WDM optical signal output from the third optical amplifier, wherein
the channel monitor monitors the WDM optical signal split by the optical splitter.

14. Optical transmission equipment, comprising:
a first optical amplifier (22) configured to amplify an input WDM optical signal;
a second optical amplifier (23) provided on an output side of the first optical amplifier; and
an optical module having a first relay port configured to receive an optical signal from the first optical amplifier, and a second relay port configured to output an optical signal to the second optical amplifier, wherein
a dispersion compensator or an equalizer configured to control the WDM optical signal output from the first optical amplifier is implemented between the first relay port and the second relay port in the optical module.

15. The optical transmission equipment according to claim 14, wherein
the equalizer is implemented in the optical module, the optical transmission equipment further comprises a channel monitor to monitor power of each channel of the WDM optical signal controlled by the equalizer,
the equalizer controls the WDM optical signal output from the first optical amplifier according to a monitor result by the channel monitor.
